Europäisches Patentamt

(19) **European Patent Office**

**Office européen des brevets**

(11) Numéro de publication: **0 130 860**
**B1**

(12) **FASCICULE DE BREVET EUROPEEN**

(45) Date de publication du fascicule du brevet:
**19.11.87**

(21) Numéro de dépôt: **84401050.4**

(22) Date de dépôt: **21.05.84**

(51) Int. Cl.⁴: **B 64 D 11/00,** B 64 C 19/00

(54) Procédé pour l'agencement d'un poste de pilotage d'aéronef de type ergonomique et poste de pilotage ainsi agencé.

(30) Priorité: **08.06.83 FR 8309496**

(43) Date de publication de la demande:
**09.01.85 Bulletin 85/2**

(45) Mention de la délivrance du brevet:
**19.11.87 Bulletin 87/47**

(84) Etats contractants désignés:
**DE GB IT NL**

(56) Documents cités:
**ASTRONAUTICS & AERONAUTICS, vol. 7, no. 11,
novembre 1969, pages 60-68; W.C. SCHULTZ: "Closing
the information gap in the cockpit"
AVIATION WEEK & SPACE TECHNOLOGY, 23 août
1982, pages 41-53; R.R. ROPELEWSKI: "Boeing's new
767 eases crew workload"**

(73) Titulaire: **AEROSPATIALE Société Nationale
Industrielle, 37, Boulevard de Montmorency,
F-75781 Paris Cédex 16 (FR)**

(72) Inventeur: **Carlet, Xavier, Chemin des Ambrits,
F-31700 Cornebarrieu (FR)**

(74) Mandataire: **Bonnetat, Christian et al, Cabinet PROPI
Conseils 23 rue de Léningrad, F-75008 Paris (FR)**

# Description

La présente invention concerne un procédé pour l'agencement de postes de pilotage d'aéronef de type ergonomique, c'est-à-dire destinés à faciliter les opérations de pilotage, permettant de rendre la sécurité maximale et à favoriser l'intégration des systèmes et de leurs commandes. Elle concerne également les postes de pilotage ainsi agencés.

On sait que la conception classique des postes de pilotage est basée sur le regroupement par panneau des organes de commande et/ou de visualisation appartenant à un même système de l'aéronef, quelle que soit l'importance desdits organes. Ainsi, dans ces postes de pilotage connus, on réalise des assemblages de panneaux d'organes de commandes et/ou de visualisation, dont chacun d'eux regroupe les éléments d'un même système. La présentation des systèmes est donc telle que sont rassemblés tous les organes de commande d'un système sur un seul panneau et que la répartition entre les ensembles de commande s'effectue seulement suivant la nature des systèmes.

Par exemple, on trouve localisés sur un même panneau tous les voyants, interrupteurs, indicateurs, etc... se rapportant soit à l'hydraulique, soit au conditionnement d'air, soit au carburant, etc... de telle sorte que l'agencement interne d'un panneau découle de la technique propre du système concerné, ce qui se traduit en général par une représentation visuelle sur le panneau sous la forme d'un synoptique constitué par un schéma et des symboles spécifiques.

Chaque panneau de commande associé à un système rassemble aussi bien les organes de commande relatifs aux opérations normales et courantes que les organes de commande relatifs aux opérations exceptionnelles, dont certaines sont protégées par un cache et correspondent à une procédure spéciale ou une manœuvre particulière.

L'utilisation de tels panneaux implique, d'une part, la connaissance technique du système et, d'autre part, la connaissance de l'état de fonctionnement dans lequel se trouve ledit système au moment de son utilisation. De plus, cette utilisation nécessite une réflexion des opérateurs avant que ceux-ci ne prennent une décision, ce qui constitue une charge de travail pouvant se révéler dangereuse dans des conditions de vol particulièrement difficiles, même si celles-ci sont extrêmement rares. Or, dans de telles conditions, ces opérateurs devraient être aidés au maximum, car souvent ils ne peuvent plus se concentrer comme dans une situation normale. Les appareils qu'ils ont à utiliser devraient donc être différents, afin d'éviter, par exemple, de placer un commandant de bord dans une situation d'affolement risquant de lui faire commettre une fausse manœuvre.

En outre, l'arrangement actuel des panneaux de commande occupe une grande surface dans le poste de pilotage, ce qui présente des inconvénients en ce qui concerne la surveillance et l'accessibilité. Cet arrangement a de ce fait une incidence non négligeable sur l'encombrement des postes de pilotage actuels, ainsi que sur leur prix de fabrication et d'installation, donc de revient.

Les inconvénients précités n'entraînent pas obligatoirement une remise en cause totale des installations classiques des postes de pilotage.

Ils sont toutefois suffisamment importants pour nécessiter une évolution des systèmes, telle que des critères d'ergonomie ou de sécurité maximale soient pris en compte dans un concept d'aménagement nouveau où les élément d'au moins certains systèmes se trouvent alors fonctionnellement redéfinis.

Dans cet esprit, la présente invention a pour objet un procédé d'adaptation d'un poste de pilotage d'aéronef, de type ergonomique et à sécurité maximale, grâce auquel sont conservés les objectifs de sécurité indépendamment de l'intégration des fonctions dans les systèmes ou même de l'intégration des systèmes entre eux, ainsi que de la centralisation de leur commande.

La mise en œuvre de l'invention permet alors de concevoir des panneaux de commande de dimensions réduites et de réalisation plus homogène, et donc plus rationnelle.

A cette fin, selon l'invention, le procédé pour l'agencement d'un poste de pilotage d'aéronef de type ergonomique comportant des panneaux répartis en zones et comprenant des organes de commande et des organes de visualisation concernant les différents systèmes dudit aéronef, lesdits organes de visualisation étant spatialement disposés dans lesdites zones selon une répartition résultant d'un partage entre lesdit organes de visualisation utilisés dans des conditions normales et lesdits organes de visualisation utilisés dans des conditions anormales ou exceptionnelles, est caractérisé en ce que lesdits organes de commande sont également spatialement disposés dans lesdites zones selon une répartition résultant d'un partage entre lesdits organes de commande utilisés dans des conditions normales et lesdits organes de commande utilisés dans des conditions anormales ou exceptionnelles en ce que le regroupement desdits organes de commande et desdits organes de visualisation est effectué en fonction de la fiabilité des sous-ensembles des systèmes auxquels ils correspondent.

Ainsi, on différencie et on sépare les sous-ensembles des systèmes d'après le mode de fonctionnement desdits systèmes et une telle ségrégation se prolonge au niveau de l'installation et des commandes des sous-ensembles sur les panneaux du poste de pilotage, ce qui revient essentiellement à séparer les fonctions d'utilisation normales et courantes, d'une part, et les fonctions de secours et exceptionnelles, d'autre part.

Il ressort de cette ségrégation une technologie propre, c'est-à-dire une sélection d'organes, tels que boutons-poussoirs, inverseurs, etc... et une organisation spécifique, c'est-à-dire une présentation des panneaux différente selon les modes et les états de fonctionnement des systèmes.

Ceci conduit à adopter une localisation spécifique pour chaque ensemble de commande, et donc à recréer de façon distincte un ensemble de commandes normales et un ensemble de secours occupant chacun une position spatiale qui lui est propre.

Une structuration d'ensemble ainsi constituée permet alors de regrouper des éléments de même fiabilité et/ou de même fréquence d'utilisation et/ou de mêmes conditions d'utilisation conduisant aux critères ergonomiques en ayant des éléments de technologie homogène, de centraliser les commandes et les visualisations tout en conservant les objectifs de fiabilité et de sécurité recherchés, de réaliser des ensembles industriels à moindre coût, de rationaliser les installations conduisant à la standardisation, de réduire l'encombrement des postes de pilotage ainsi que les alimentations électriques nécessaires aux panneaux de commande et enfin de conduire à une intégration généralisée, des systèmes d'une part, et de leurs commandes d'autre part.

On remarquera que les documents Astronautics & Aeronautics, vol. 7, n° 11 novembre 1969, pages 60 à 68, W.C. Schultz: «Closing the information gap in the cockpit» et Aviation Week & Space Technology, 23 août 1982, pages 41–53, R.R. Ropelewski: «Boeing's new 767 eases crew workload» décrivent déjà un procédé pour l'agencement d'un poste de pilotage d'aéronef et un poste de pilotage, respectivement, conforme aux préambules de la revendication 1 et de la revendication 2, respectivement, un tel poste de pilotage comportant des panneaux répartis en zones et comprenant des organes de commande et de visualisation des différents systèmes de l'aéronef, les organes de visualisation étant spatialement disposés dans les zones des panneaux selon une répartition résultant d'un partage des organes de visualisation utilisés dans des conditions normales et des organes utilisés dans des conditions exceptionnelles.

Toutefois, pour remédier aux inconvénients de la technique antérieure rappelée en introduction et pouvoir bénéficier des avantages de l'invention mentionnés ci-dessus, il n'est pas suffisant de prévoir un partage particulier des seuls organes de visualisation. En réalité, il est nécessaire de prendre en compte les organes de commande et de procéder aux partages et aux regroupements mentionnés dans la partie caractérisante de la revendication 1.

Il est alors possible de rationaliser l'agencement d'un poste de pilotage, tout en satisfaisant aux critères de fiabilité et de sécurité.

Ainsi, selon l'invention, le poste de pilotage d'aéronef de type ergonomique comportant des panneaux, répartis en zones et comprenant des organes de commande et de visualisation concernant les différents systèmes dudit aéronef, dans lequel lesdits organes de visualisation sont spatialement disposés dans lesdites zones selon une répartition résultant d'un partage entre lesdits organes de visualisation utilisés dans des conditions normales et lesdits organes de visualisation utilisés dans des conditions anormales ou exceptionnelles, est caractérisé en ce que lesdits organes de commande sont également spatialement disposés dans lesdites zones selon une répartition résultant d'un partage entre lesdits organes de commande utilisés dans des conditions normales et lesdits organes de commande utilisés dans des conditions anormales ou exceptionnelles et en ce que lesdits organes de visualisation et lesdits organes de commande sont regroupés en fonction de la fiabilité des sous-ensembles des systèmes auxquels ils correspondent.

De façon usuelle, un poste de pilotage est divisé, en ce qui concerne la répartition des panneaux d'organes de commande, en quatre zones, à savoir:

– une première zone disposée en plafond, immédiatement au-dessus de la partie vitrée du poste de pilotage, c'est-à-dire pratiquement devant les yeux du ou des pilotes;

– une seconde zone également disposée en plafond, à la suite de ladite première zone vers l'arrière de l'aéronef, c'est-à-dire à l'aplomb du ou des sièges du ou des pilotes;

– une troisième zone également disposée en plafond, à la suite de ladite seconde zone vers l'arrière de l'aéronef, c'est-à-dire en arrière de l'aplomb du ou des sièges du ou des pilotes; et

– une quatrième zone disposée immédiatement au-dessous de la partie vitrée du poste de pilotage, au niveau du ou des sièges du ou des pilotes.

La visibilité et l'accessibilité de ces quatre zones sont différentes, la première et la troisième zone étant respectivement la plus et la moins visible et accessible, tandis que la seconde zone est relativement bien visible et accessible, mais au prix d'un certain effort ou d'une certaine gêne et que la quatrième zone est aussi visible que la première mais légèrement moins accessible.

Aussi, selon l'invention, un poste de pilotage comprenant quatre telles zones est caractérisé en ce que ladite première zone contient les panneaux de commandes courantes, en ce que la troisième zone regroupe les panneaux d'organes de commande de systèmes secondaires et en ce que les seconde et quatrième zones regroupent la majorité des panneaux d'organes de commande des autres systèmes.

Un tel poste de pilotage est de plus avantageusement caractérisé en ce que la quatrième zone comporte les commandes intégrées dans un système multifonctions satisfaisant à des conditions de fiabilité homogènes avec les sous-ensembles des systèmes auxquels elles correspondent, tandis que la seconde zone comporte les commandes correspondant au fonctionnement de secours et satisfaisant aux conditions de fiabilité requises par les sous-ensembles des systèmes correspondants.

Le figures du dessin annexé feront bien comprendre comment l'invention peut être réalisée.

La figure 1 est une vue très schématique en coupe longitudinale illustrant le dégagement visuel des zones du poste de pilotage d'un aéronef classique.

La figure 2 est une vue générale de l'arrière et en perspective d'un poste de pilotage situant les panneaux représentés figure 3.

La figure 3 est une représentation visuelle d'une partie du tableau de bord d'un poste de pilotage d'aéronef classique, concernant en particulier la génération et le conditionnement d'air.

Les figures 4 et 5 donnent une représentation visuelle de la même fonction de génération et de conditionnement d'air selon le concept d'ergonomie et de sécurité maximale conforme à l'invention.

La figure 6 donne le schéma synoptique d'une installation de génération et de distribution électrique d'un aéronef bimoteur.

Les figures 7 et 8 donnent une représentation des tableaux de commande de l'installation de la figure 6, conformément à l'invention.

La figure 9 donne une représentation visuelle d'un tableau de commande connu pour l'installation de la figure 6.

La figure 10 illustre un tableau de commande connu de régulation de pression.

Les figures 11 et 12 donnent une représentation d'une partie de tableau de bord conforme à l'invention, correspondant à la fonction de régulation de pression montrée par la figure 10.

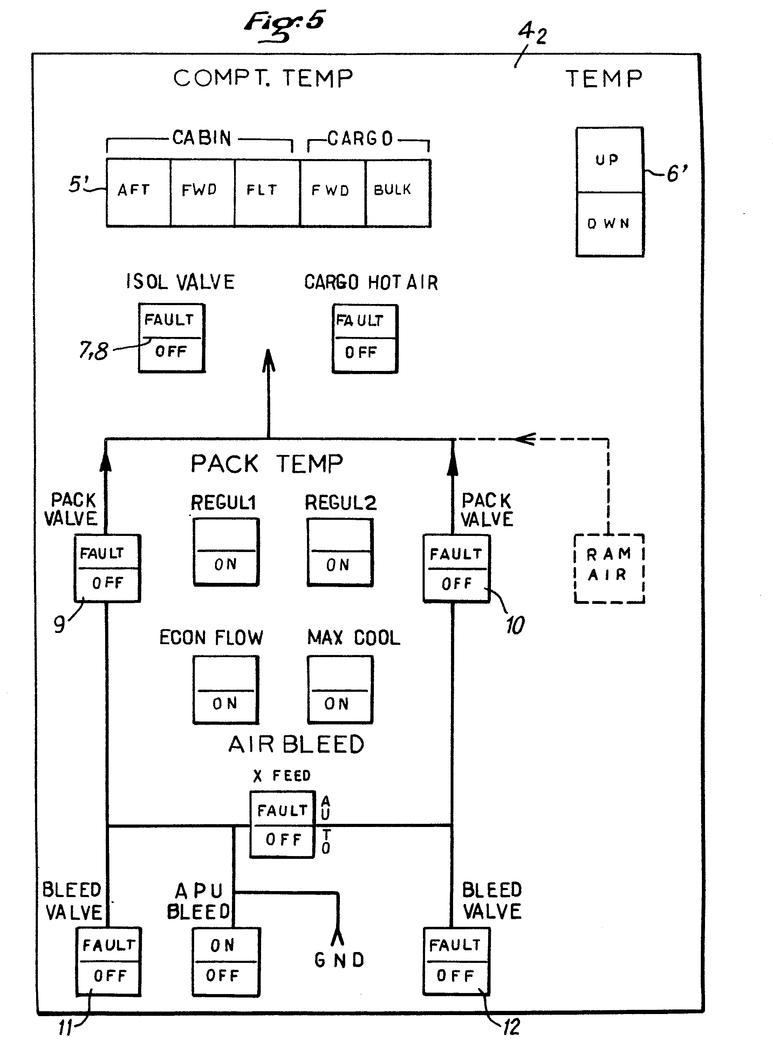

Il doit être noté que les désignations portées en langue anglaise sur tous. les panneaux montrés sur les figures 3 et 4, répondent à une réglementation internationale et en particulier à la «Standard Specification» 11.00.02.00 référence 00A.000.15200 du 30 janvier 1981.

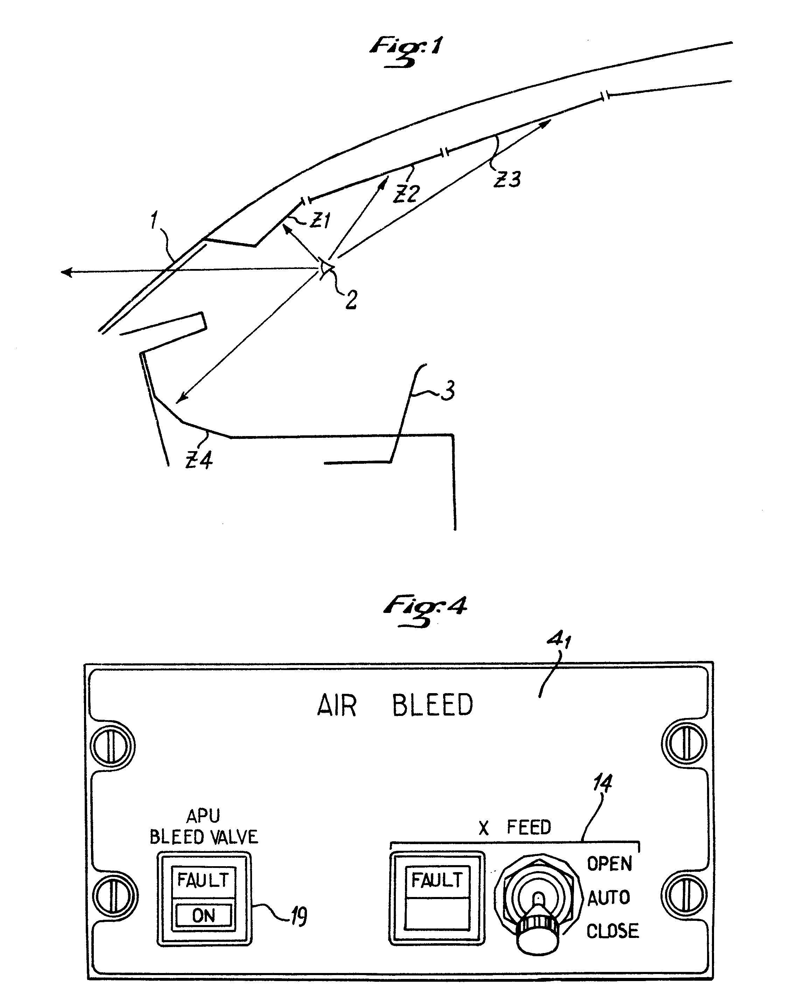

Comme cela est illustré très schématiquement sur la figure 1, les panneaux de commande d'un aéronef sont, à l'intérieur du poste de pilotage, usuellement répartis en quatre zones, à savoir:

– une première zone Z1, disposée en plafond immédiatement au-dessus des glaces frontales 1 du poste de pilotage. Cette zone est particulièrement bien visible et accessible, sans effort pour le ou les pilotes, puisqu'elle est située au-dessus et légèrement en avant de leurs yeux 2, de sorte qu'un simple basculement de la tête en arrière permet d'en voir l'intégralité;

– une seconde zone Z2, disposée en plafond, sensiblement à l'aplomb du ou des sièges 3 du ou des pilotes, de sorte que son accès et sa visibilité quoique bons, nécessitent un effort de la part desdits pilotes;

– une troisième zone Z3, disposée en plafond, mais en arrière de l'aplomb du ou des sièges 3, de sorte que son accès et sa visibilité sont difficiles;

– une quatrième zone Z4, qui est disposée sous les glaces frontales 1, au niveau des sièges 3 et dont l'accès et la visibilité n'entraînent que peu d'effort de la part du ou des pilotes.

Sur la figure 3, on a représenté des panneaux 4 usuels portant les organes de commande et de visualisation des systèmes de génération et de conditionnement d'air d'un aéronef.

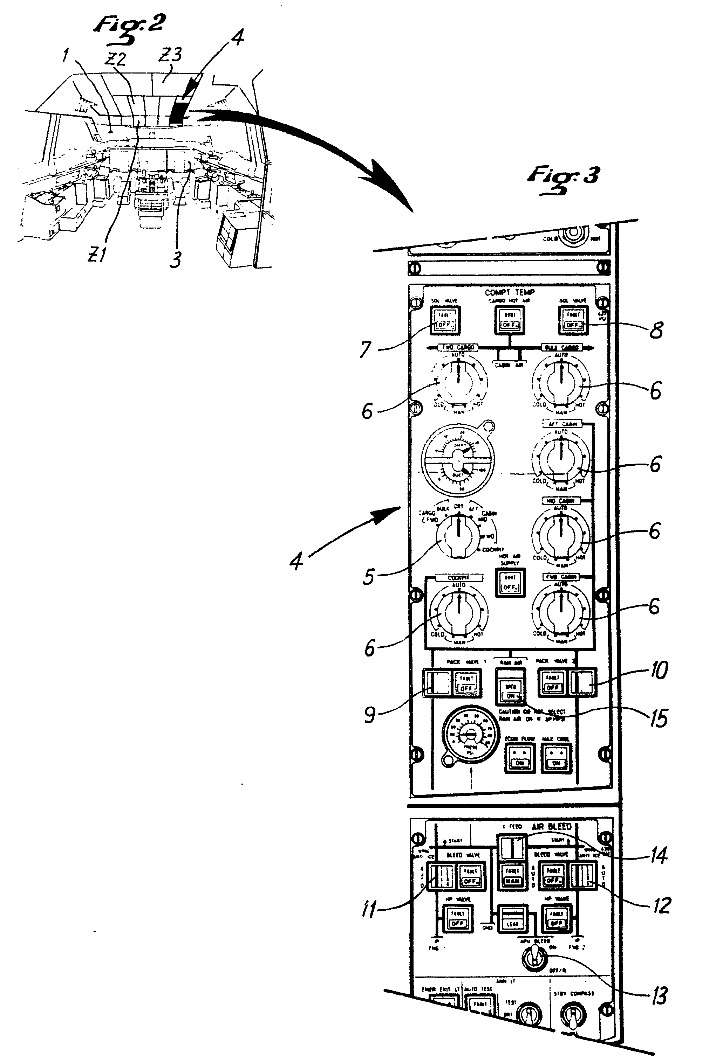

Ces panneaux 4, de structure connue, sont usuellement, dans le poste de pilotage, disposés, en zones Z1 et Z2, comme l'indique la figure 2. Ils comportent, notamment:

– un sélecteur 5, qui permet de choisir le compartiment de l'aéronef dont on veut régler la température et des boutons 6 qui permettent d'afficher la température désirée dans chacun desdits compartiments;

– des boutons de commande 7 et 8, qui permettent d'utiliser les groupes de refroidissement, en cas de panne de leur système automatique de régulation;

– deux boutons-poussoirs 9 et 10 (un pour chaque «Pack Valve»), qui permettent de commander la fermeture des vannes de sortie des groupes de refroidissement, en cas notamment de mauvais fonctionnement de ces derniers. Les vannes doivent également être commandées dans certaines configurations particulières du système;

– deux boutons-poussoirs 11 et 12 (un pour chaque «Bleed valves»), qui permettent de commander les vannes d'alimentation en air, en cas notamment de mauvais fonctionnement du dispositif d'alimentation correspondant.

– une commande 13 d'alimentation en air par l'APU (Auxiliary Power Unit) et une commande 14 d'intercommunication, qui sont utilisées en cas de pannes, mais peuvent l'être également assez fréquemment pour des configurations d'alimentation en air inhabituelles;

– une commande 15 (RAM AIR) qui est d'une utilisation très exceptionnelle, lors d'une panne totale de tout le système. Elle correspond à une prise d'air directe, à l'extérieur de l'avion, utilisée en dernier secours, lorsque les prises d'air normales sont totalement inopérantes. La commande de cette prise d'air ne devant être actionnée qu'exceptionnellement est recouverte par un cache d'interdiction.

Conformément à l'invention, on réagence et on restructure les panneaux 4 de la figure 3 en procédant à une séparation de leurs éléments de commande suivant leur utilisation.

Ainsi, selon l'invention, on sépare les éléments de commande 13 et 14, qui peuvent être utilisés normalement, des autres éléments 5 à 12 qui sont utilisés en cas de panne de l'équipement correspondant et on les dispose sur un panneau $4_1$ (voir la figure 4). On obtient de la sorte un panneau $4_1$ que l'on peut disposer dans les zones Z1 et/ou Z2 bien accessibles et visibles et qui est simple et très explicite.

Tous les autres organes qui se trouvaient sur les panneaux 13 sont portés par un panneau $4_2$ et ce dernier panneau est disposé à proximité des tubes cathodiques, de préférence en zone Z4. Ces commandes rassemblées sur le panneau $4_2$ peuvent éventuellement être intégrées dans un système du type «multifonctions».

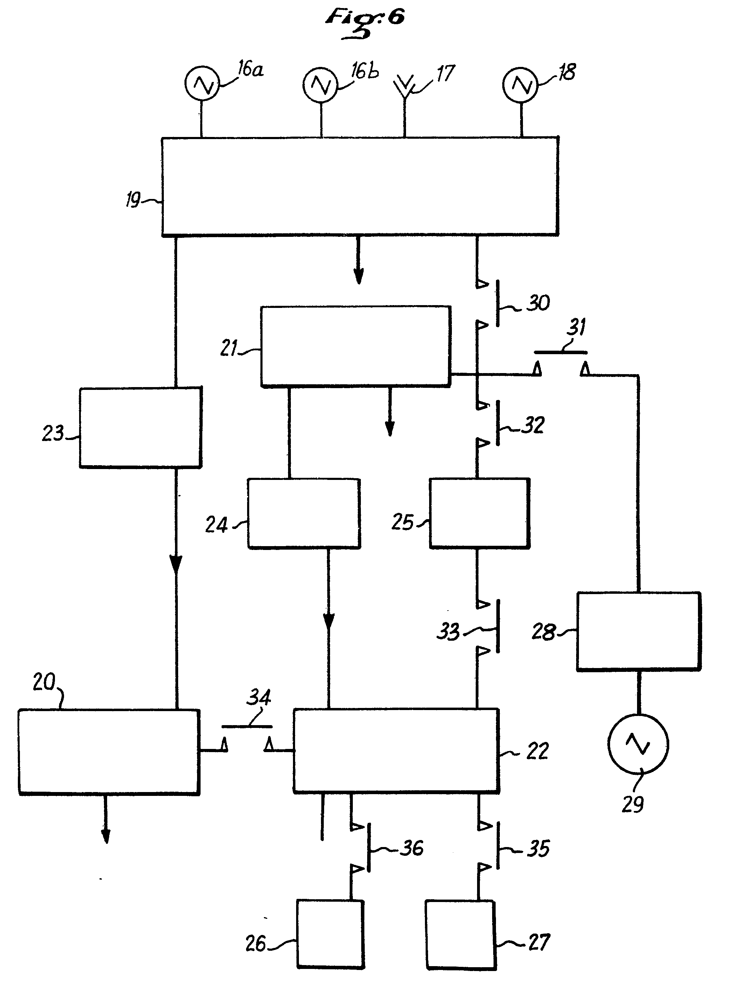

La figure 5 illustre un tel tableau de commande multifonctions $4_2$ associé à un tube cathodique, qui rassemble tous les éléments de commande et de visualisation.

Les fonctions associées sont celles des éléments du panneau 4 de la tige 3, à l'exception de la commande 15 (RAM AIR) qui peut être située sur un panneau de secours en zone Z2.

Comme dans un tel panneau de commande $4_2$ les actions ne peuvent être effectuées que par boutons-poussoirs donnant un ordre logique (zéro ou un), les affichages de température sont assurés par des boutons-poussoirs 5' pour la sélection de la zone et 6' pour incrémenter ou décrémenter la valeur affichée sur le tube cathodique à la place des boutons-poussoirs 5 et 6 représentés sur la figure 3.

Les autres boutons de commande 7 à 12 de la figure 5 assurent les mêmes fonctions que sur la figure 3 et peuvent varier suivant la définition du système.

On décrit ci-après un autre exemple d'agencement selon l'invention concernant le système de génération électrique d'un aéronef bi-réacteur, pour montrer comment, dans le cadre de l'invention, le découpage des systèmes peut être réalisé fonctionnellement.

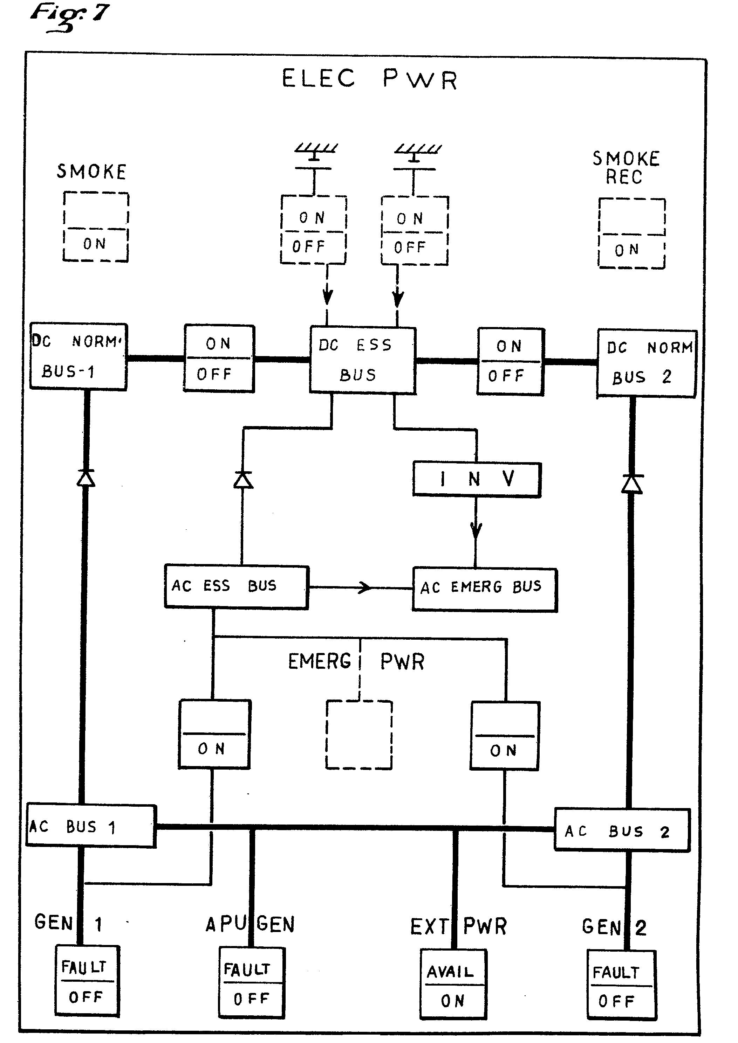

On sait que dans un aéronef bi-réacteur (voir la figure 6), le système de génération électrique, dit «principal» est généralement constitué comme suit:

– deux ensembles générateurs 16a et 16b liés aux moteurs en constituant deux chaînes principales de fonctionnement;

– un ensemble générateur 18 lié à l'APU et pouvant suppléer la défaillance d'un système lié à un moteur;

– une alimentation au sol par «prise de parc» 17.

La combinaison de ces quatres ensembles de génération électrique assure l'alimentation générale de tous les circuits de l'avion et ce pratiquement tout le temps, ce qui correspond au fonctionnement «Normal» (pas de panne) ou à un fonctionnement légèrement dégradé, dans le cas de panne d'un équipement ou d'un alternateur, par exemple.

Ces cas sont prévus dans la redondance des systèmes, ainsi que par les fonctionnements automatiques selon lesquels les batteries n'assurent plus alors que le démarrage autonome de l'APU.

Lors d'incidents majeurs éventuels, il est envisagé que, très exceptionnellement, toutes les sources du système principal de génération électrique puissent être défectueuses.

Dans un tel cas, il est donc prévu un système de secours le plus indépendant possible du système principal, qui peut alimenter les éléments essentiels de l'avion en garantissant ainsi la sécurité.

Un tel système de secours peut être constitué par des batteries 26, 27 ou par un générateur électrique auxiliaire 29, actionné par une source ne dépendant pas des moteurs.

Ces deux groupes de systèmes (principal et de secours) sont donc à la fois liés par leur nature, qui est fonctionnellement électrique, et sont séparés par leurs utilisations qui dépendent de conditions normales ou exceptionnelles.

Le schéma synoptique de la figure 6 représente le système de génération et distribution électrique avec ses sous-ensembles intégrés «Normal» et «Secours», chacun comportant ses éléments de commutation et de distribution.

Il apparaît sur ce schéma:

– les générateurs normaux ($16_a$–$16_b$–17–18) et de secours (26–27–29);

– des ensembles de distribution et commutation intégrés, à savoir un ensemble 19 de commutation et de distribution de courant alternatif normal, un ensemble 20 de distribution de courant continu normal, un ensemble 21 de distribution de courant alternatif de secours, un ensemble 22 de distribution de courant continu de secours, et un ensemble 28 de génération de secours de courant alternatif et continu;

– des éléments de commutation 30 à 36 entre les ensembles 19 à 22 et 28;

– des éléments de transformation et de liaison, tels que les transformateurs-redresseurs 23 et 24 et le convertisseur statique 25.

A chaque ensemble est associé une probabilité de fonctionnement, établie à partir de la fiabilité de ses différents sous-ensembles et correspondant aux objectifs de navigabilité.

Ainsi, la perte des ensembles de commutation et de distribution «Normal» correspond à des pertes majeures et conduit à des situations critiques.

La perte des ensembles «Secours» conduit à des situations catastrophiques.

A partir de ce schéma synoptique de principe, on conçoit la réalisation de l'installation et des panneaux du poste de pilotage, conformément à l'invention.

La figure 7 illustre un exemple de réalisation du panneau de commande des ensembles «normaux», situé en zone Z4 et constitué par exemple par un clavier multifonctions ou un écran à commande tactile synthétisant le schéma synoptique de la génération et de la distribution électrique et les boutons de commande; les traits pleins représentent par exemple les éléments commandables et les pointillés ceux correspondant à la commande «Secours», situés au plafond et non commandables par l'écran.

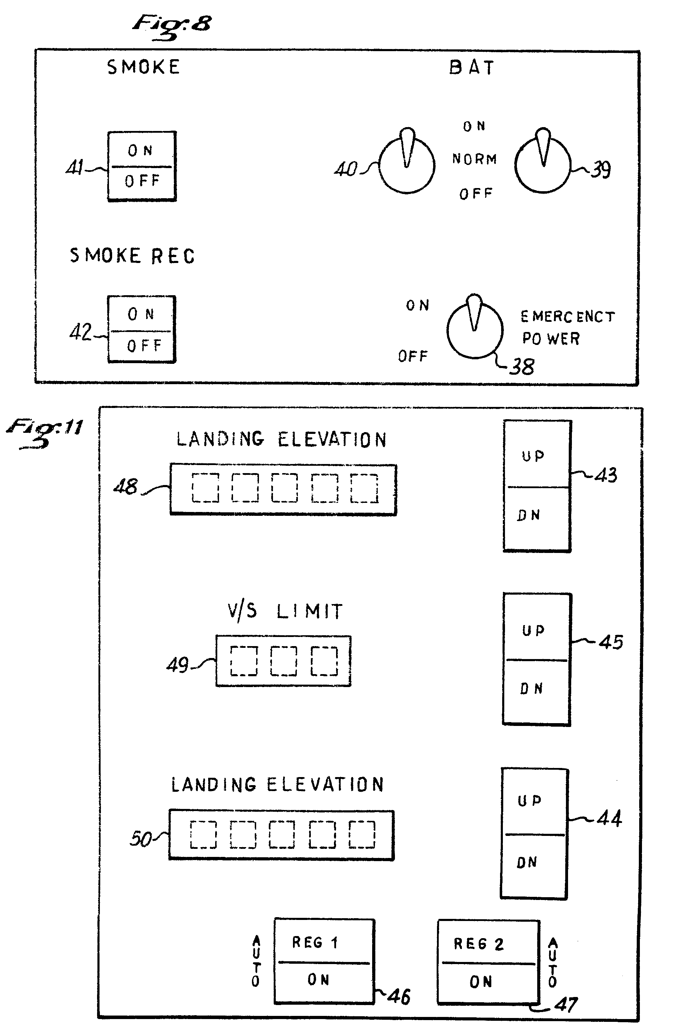

La figure 8 représente le panneau de commande «Secours» selon l'invention. Il est du type classique avec inverseurs et boutons-poussoirs à fort pouvoir de coupure. Il permet d'effectuer les commutations entre les différents ensembles représentés sur la figure 6 et notamment de mettre en circuit l'élément «Secours».

Ainsi, par exemple, l'inverseur 38 de la figure 8 commande les contacteurs 30 et 31 de la figure 6 pour alimenter l'ensemble «Secours» alternatif et continu par le générateur «Secours» 28 et non plus par l'ensemble «Normal» 19.

Les inverseurs 39 et 40 de la figure 8 permettent soit en «Secours» ultime d'utiliser les batteries (position «ON»), soit en cas d'incident sur une batterie de la mettre impérativement hors service «position OFF».

Les boutons-poussoirs 41 et 42 sont utilisés en cas de procédures relatives aux fumées, l'un pour provoquer un délestage important des alimentations, l'autre pour déclencher une procédure de retour à la normale.

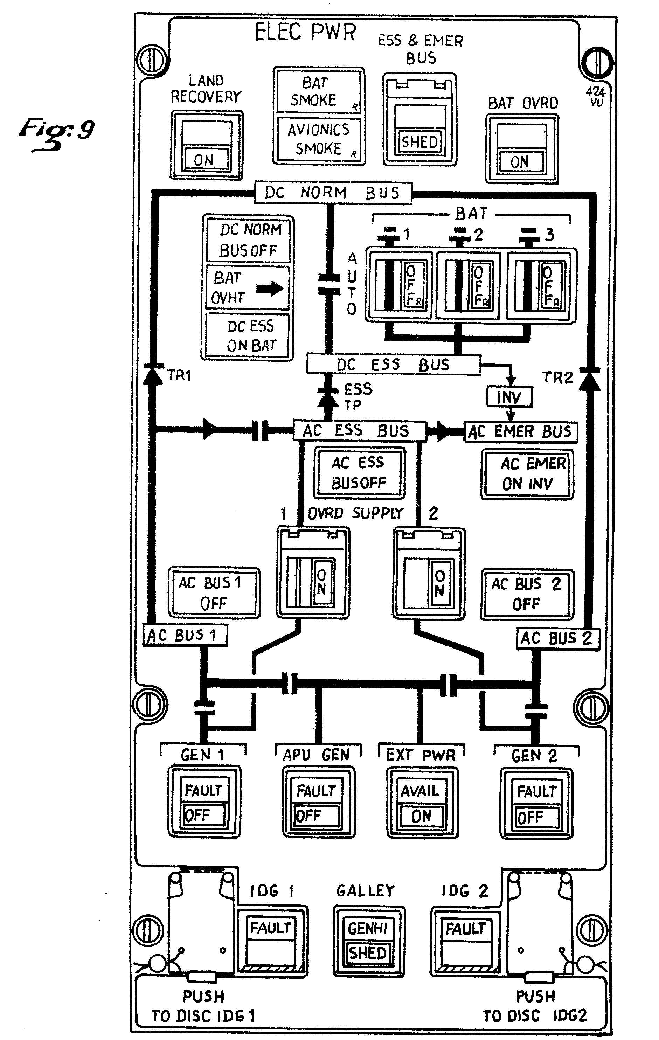

A titre de comparaison, afin de bien illustrer l'originalité des panneaux selon l'invention, montrés sur les figures 7 et 8, on montre sur la figure 9 un panneau de commande connu pour l'installation électrique de la figure 6.

De même, sur un aéronef, le système de régulation de pression est constitué d'un système automatique doublé et commutable soit automatiquement, soit manuellement et d'un système de secours totalement indépendant et utilisant une technologie différente et classique.

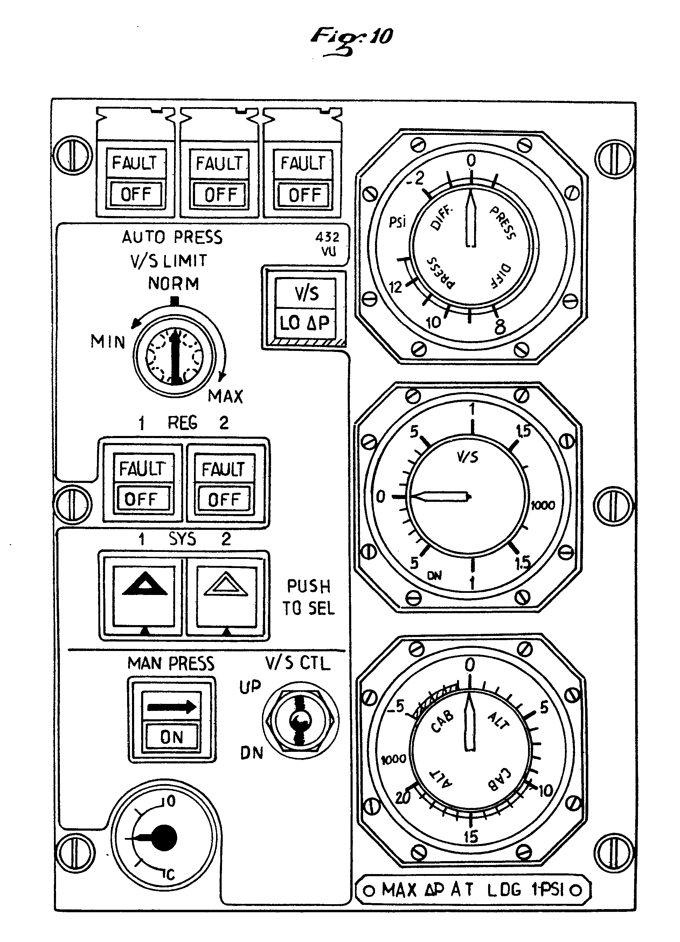

La figure 10 représente un panneau connu qui correspond à cette conception de principe et dont les éléments de commande et de visualisation sont rassemblés sur un même panneau.

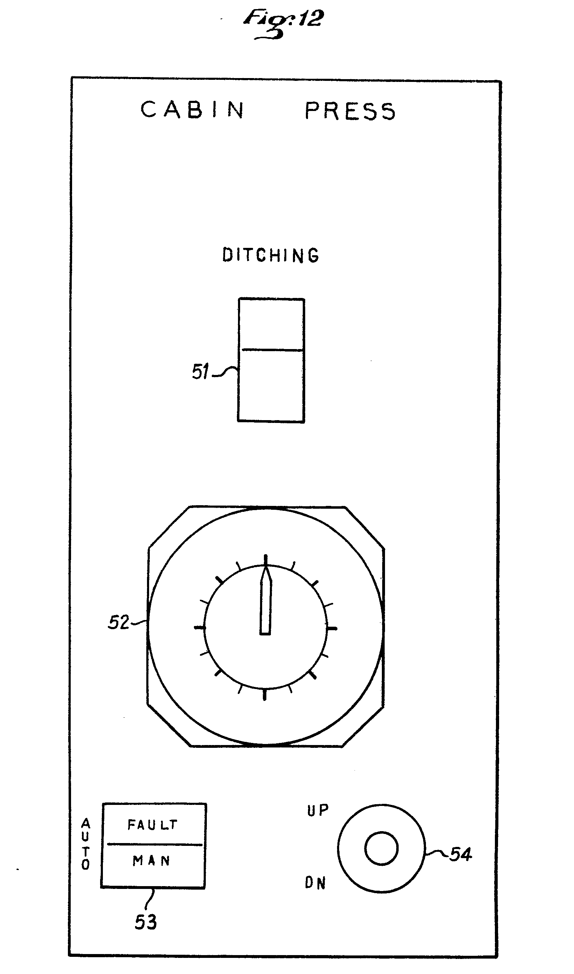

La figure 11 représente les affichages et les commandes du système automatique pouvant être intégrés, conformément à l'invention, dans un ensemble multifonctions ou dans un système associé à des calculateurs gérant la conduite de vol.

La figure 12 représente les éléments «Secours» de la figure 10 qui demeurent dans un panneau de plafond, conformément à l'invention.

En utilisation normale, le choix du système automatique s'effectue à l'aide des boutons-poussoirs 46 et 47 et l'affichage de l'altitude du lieu d'atterrissage en 48 à l'aide des commandes 43 ou à l'aide des commandes 44 pour l'affichage en 50.

Le V/S limite commun aux deux régulateurs est affiché en 49.

Aussi, selon l'invention, on prévoit un premier panneau (celui de la figure 11), disposé en zone Z1 ou Z2, sur lequel sont prévues les commandes principales du système principal et un second panneau (celui de la figure 12) disposé en zone Z3 ou Z4, sur lequel sont prévues les commandes du système de secours actuellement situées sur le bas du panneau de la figure 10. Ainsi, le choix de ce mode de fonctionnement est effectué par le bouton 53, l'altitude cabine est affichée sur l'indicateur 52, la commande manuelle des vannes est alors effectuée par l'inverseur 54 et le bouton 51 commande la fermeture des vannes en cas d'amerrissage.

On voit donc que l'invention consiste essentiellement à:

— effectuer un découpage dans chaque système à partir de critères d'utilisation spécifiques, en particulier suivant le critère «Normal» – «Secours»;

— regrouper dans les diverses catégories d'utilisation plusieurs systèmes indépendamment de leur nature, de leur fonction ou de leur structure propre.

Une telle structuration des ensembles ainsi constitué présente de nombreux avantages, et notamment le regroupement d'éléments ou d'organes

· de même fiabilité

· de même fréquence d'utilisation

· de mêmes conditions d'utilisation conduisant aux critères ergonomiques, ce qui permet:

— de grouper des éléments de technologie homogène;

— de centraliser les commandes et les visualisations tout en conservant les objectifs de fiabilité et de sécurité;

— de rationaliser les installations allant vers la standardisation;

— de réduire l'encombrement dans le poste de pilotage ainsi que les alimentations électriques nécessaires aux panneaux de commande; et

— de conduire à une intégration généralisée des systèmes.

La présente invention est basée sur des études d'ergonomie qui montrent que l'apprentissage d'un pilote est continu, jamais définitif et que l'exploitation et l'utilisation d'équipements modifient le comportement de l'utilisateur. Inversement, le manque d'utilisation entraîne un «désapprentissage».

Il en résulte, d'une part, que des systèmes ayant des fréquences d'utilisation différentes ne doivent pas être traités ergonomiquement de façon identique et d'autre part, que des systèmes utilisés de manière analogue, à la même fréquence, ou dans les mêmes conditions peuvent être traités ergonomiquement, et donc technologiquement, de la même façon.

En mettant ces principes en œuvre, on amènage selon l'invention les commandes utilisées dans une situation critique pour que le pilote puisse les actionner plus par réflexe que par réflexion: toutes les commandes d'utilisation exceptionnelles sont séparées et bien visibles; ainsi, dans une telle situation, le pilote, qui risque de plus de s'affoler, n'a pas à choisir un petit bouton parmi d'autres, à partir d'inscriptions. En revanche, les commandes utilisées dans une situation normale, non critique, peuvent être miniaturisées, rassemblées et commandées séquentiellement à l'aide de dispositifs multifonctions, non seulement à l'intérieur d'un système, mais encore pour plusieurs systèmes.

La présente invention permet donc d'intégrer les commandes usuelles (les plus nombreuses) des systèmes. Une telle intégration des commandes favorise par suite l'intégration des systèmes eux-mêmes, notamment au moyen de calculateur: en effet, l'intégration des systèmes n'est guère justifiable si les commandes de ceux-ci restent séparées.

En plus de la fréquence d'utilisation, l'autre guide essentiel d'intégration, selon l'invention, est la fiabilité des divers éléments à intégrer. On regroupe et intègre des éléments dont la fiabilité est homogène, tant au niveau de chaque système qu'à celui des technologies des commandes ou des alimentations associées.

**Revendications**

1. Procédé pour l'agencement d'un poste de pilotage d'aéronef de type ergonomique comportant des panneaux, répartis en zones (Z1 à Z4) et comprenant des organes de commande et des organes de visualisation (5 à 13 et 38 à 54) concernant les différents systèmes dudit aéronef, lesdits organes de visualisation étant spatialement disposés dans lesdites zones (Z1 à Z4) selon une répartition résultant d'un partage entre lesdits organes de visualisation utilisés dans des conditions normales et lesdits organes de visualisation utilisés dans des conditions anormales ou exceptionnelles, caractérisé en ce que lesdits organes de commande sont également spatialement disposés dans lesdites zones (Z1 à Z4) selon une répartition résultant d'un partage entre lesdits organes de commande utilisés dans des conditions normales et lesdits organes de commande utilisés dans des conditions anormales ou exceptionnelles et en ce que le regroupement desdits organes de commande et desdits organes de visualisation est effectué en fonction de la fiabilité des sous-ensembles des systèmes auxquels ils correspondent.

2. Poste de pilotage d'aéronef de type ergonomique comportant des panneaux, répartis en zones (Z1 à Z4) et comprenant des organes de commande et de visualisation (5 à 13 et 38 à 54) concernant les différents systèmes dudit aéronef, dans lequel lesdits organes de visualisation sont spatialement disposés dans lesdites zones (Z1 à Z4) selon une répartition résultant d'un partage entre lesdits organes de visualisation utilisés dans des conditions normales et lesdits organes de visualisation utilisés dans des conditions anormales ou exceptionnelles, caractérisé en ce que lesdits organes de commande sont également spatialement disposés dans lesdites zones (Z1 à Z4) selon une répartition résultant d'un partage entre lesdits organes de commande utilisés dans des conditions normales et lesdits organes de commande utilisés dans des conditions anormales ou exceptionnelles et en ce que lesdits organes de visualisation et lesdits organes de commande sont regroupés en fonction de la fiabilité des sous-ensembles des systèmes auxquels ils correspondent.

3. Poste de pilotage selon la revendication 2, divisé, en ce qui concerne la répartition des panneaux d'organes de commandes, en quatre zones, à savoir:

– une première zone (Z1) disposée en plafond, immédiatement au-dessus de la partie vitrée du poste de pilotage, c'est-à-dire pratiquement devant les yeux du ou des pilotes;

– une seconde zone (Z2) également disposée en plafond, à la suite de ladite première zone vers l'arrière de l'aéronef, c'est-à-dire à l'aplomb du ou des sièges du ou des pilotes;

– une troisième zone (Z3) également disposée en plafond, à la suite de ladite seconde zone vers l'arrière de l'aéronef, c'est-à-dire en arrière de l'aplomb du ou des sièges du ou des pilotes; et

– une quatrième zone (Z4) disposée immédiatement au-dessous de la partie vitrée du poste de pilotage, au niveau du ou des sièges du ou des pilotes,

caractérisé en ce que ladite première zone contient les panneaux de commandes courantes, en ce que la troisième zone regroupe les panneaux d'organes de commande de systèmes secondaires et en ce que les seconde et quatrième zones regroupent la majorité des panneaux d'organes de commande des autres systèmes.

4. Poste de pilotage selon la revendication 3, caractérisé en ce que la quatrième zone (Z4) comporte les commandes intégrées dans un système multifonctions satisfaisant à des conditions de fiabilité homogènes avec les sous-ensembles des systèmes auxquels elles correspondent, tandis que la seconde zone (Z2) comporte les commandes correspondant au fonctionnement de secours et satisfaisant aux conditions de fiabilité requises par les sous-ensembles des systèmes correspondants.

**Patentansprüche**

1. Verfahren zur Gestaltung einer ergonomischen Flugzeugpilotenkanzel mit in Zonen (Z1 bis Z4) angeordneten Schalttafeln, auf denen sich Steuer- und Anzeigeorgane (5 bis 13 und 38 bis 54) für die verschiedenen Systeme des Flugzeugs befinden, wobei die Anzeigeorgane räumlich in den Zonen (Z1 bis Z4) gemäss einer derartigen Anordnung verteilt sind, dass sich eine Trennung zwischen den unter normalen Betriebsbedingungen verwendeten Anzeigeorganen und den unter anomalen oder Ausnahme-Betriebsbedingungen verwendeten Anzeigeorganen ergibt, dadurch gekennzeichnet, dass die Steuerorgane ebenfalls räumlich in den Zonen (Z1 bis Z4) gemäss einer derartigen Anordnung verteilt sind, dass sich eine Trennung zwischen den unter normalen Betriebsbedingungen verwendeten Steuerorganen und den unter anomalen oder Ausnahme-Betriebsbedingungen verwendeten Steuerorganen ergibt, und dass die Gruppierung der Steuer- und Anzeigeorgane in Abhängigkeit von der Zuverlässigkeit der Systembaugruppen vorgenommen wird, mit denen sie zusammenwirken.

2. Ergonomische Flugzeugpilotenkanzel mit in Zonen (Z1 bis Z4) angeordneten Schalttafeln, auf denen sich Steuer- und Anzeigeorgane (5 bis 13 und 38 bis 54) für die verschiedenen Systeme des Flugzeugs befinden, wobei die Anzeigeorgane räumlich in den Zonen (Z1 bis Z4) gemäss einer derartigen Anordnung verteilt sind, dass sich eine Trennung zwischen den unter normalen Betriebsbedingungen verwendeten Anzeigeorganen und den unter Ausnahme-Betriebsbedingungen verwendeten Anzeigeorganen ergibt, dadurch gekennzeichnet, dass die Steuerorgane ebenfalls räumlich gemäss einer derartigen Anordnung in den Zonen (Z1 bis Z4) verteilt sind, dass sich eine Trennung zwischen den unter normalen Betriebsbedingungen und den unter anomalen oder Ausnahme-Betriebsbedingungen verwendeten Steuerorganen ergibt, und dass die Steuer- und Anzeigeorgane in Abhängigkeit von der Zuverlässigkeit der Systembaugruppen, mit denen sie zusammenwirken, gruppiert sind.

3. Pilotenkanzel nach Anspruch 2, die bezüglich der Anordnung der Schalttafeln in vier Zonen aufgeteilt ist, nämlich in

– eine erste Zone (Z1), angeordnet an der Decke unmittelbar oberhalb des verglasten Teils der Pilotenkanzel, d.h. praktisch vor den Augen des oder der Piloten;

– eine zweite Zone (Z2), ebenfalls angeordnet an der Decke, hinter der ersten Zone zum rückwärtigen Teil des Flugzeugs hin, d.h. senkrecht über dem oder den Sitz(en) des oder der Piloten;

   – eine dritte Zone (Z3), ebenfalls angeordnet an der Decke, hinter der zweiten Zone zum rückwärtigen Teil des Flugzeugs hin, d.h. hinter der Senkrechten auf den oder die Sitz(e) des oder der Piloten; und

   – eine vierte Zone (Z4), angeordnet unmittelbar unter dem verglasten Teil der Pilotenkanzel, in Höhe des oder der Sitze(s) des oder der Piloten,

   dadurch gekennzeichnet, dass die erste Zone (Z1) die Schalttafeln für die laufenden Steuerungen enthält, dass die dritte Zone (Z3) die Schalttafeln für die Steuerorgane sekundärer Systeme umfasst, und dass die zweite (Z2) und vierte Zone (Z4) die Mehrzahl der Steuerorgane der anderen Systeme enthält.

   4. Pilotenkanzel nach Anspruch 3, dadurch gekennzeichnet, dass die vierte Zone (Z4) die Steuerungen integriert in einem Multifunktions-System enthält, womit gleichmässige Zuverlässigkeitsbedingungen mit den Systembaugruppen, mit denen sie zusammenwirken, erzielt werden, während die zweite Zone (Z2) die Steuerungen enthält, die bei Not-Situationen wirksam werden und die die von den entsprechenden Systembaugruppen geforderten Zuverlässigkeitsbedingungen aufweisen.

**Claims**

   1. Process for arranging an aircraft cockpit of ergonomic type comprising panels, distributed in zones (Z1 to Z4) and comprising control and display (5 to 13 and 38 to 54) members concerning the different systems of sais aircraft, said display members being spatially disposed in said zones (Z1 to Z4) in a distribution resulting from a division between said display members used under normal conditions and said display members used under abnormal or exceptional conditions, characterized in that said control members are also disposed in said zones (Z1 to Z4) in a distribution resulting from a division between said control members used unter normal conditions and said control members used under abnormal or exceptional conditions, and in that the regrouping of said control members and said display members is effected as a function of the reliability of the subassemblies of the systems to which they correspond.

   2. Aircraft cockpit of ergonomic type comprising panels distributed in zones (Z1 to Z4) and comprising control and display members (5 to 13 and 38 to 54) concerning the different systems of said aircraft, wherein said display members are spatially disposed in said zones (Z1 to Z4) in a distribution resulting from a division between said display members used under normal conditions and said display members used under abnormal or exceptional conditions, characterized in that said control members are also spatially disposed in said zones (Z1 to Z4) in a distribution resulting from a division between said control members used under normal conditions and said control members used under abnormal or exceptional conditions, and in that the regrouping of said control members and said display members is effected as a function of the reliability of the subassemblies of the systems to which they correspond.

   3. Cockpit according to claim 2, divided, as far as the distribution of the panels of control members is concerned, into four zones, namely:

   – a first zone (Z1) disposed on the ceiling, immediately above the front windshields of the cockpit, i.e. virtually in front of the pilots' eyes;

   – a second zone (Z2), likewise disposed on the ceiling, following said first zone towards the rear of the aircraft, i.e. straight above the pilots' seats;

   – a third zone (Z3), likewise disposed on the ceiling, following said second zone towards the rear of the aircraft, i.e. to the rear of the pilots' seats; and

   – a fourth zone (Z4) disposed immediately below the front windshields of the cockpit, at the level of the pilots' seats,

   characterized in that said first zone contains the current control panels, in that the third zone groups together the panels of control members of secondary systems and in that the second and fourth zones group together the majority of the panels of control members of the other systems.

   4. Cockpit according to claim 3, characterized in that the fourth zone (Z4) comprises the controls integrated in a multifunction system satisfying conditions of reliability homogeneous with the sub-assemblies of the systems to which they correspond, whilst the second zone (Z2) comprises the controls corresponding to emergency operation and satisfying the conditions of reliability required by the sub-assemblies of the corresponding systems.

## Fig.1

Z1, Z2, Z3, Z4
1, 2, 3

## Fig.4

AIR BLEED

APU
BLEED VALVE

FAULT
ON
19

X FEED
14

FAULT

OPEN
AUTO
CLOSE

41

Fig.2

Fig.3

Fig. 5    3/9

0 130 860

COMPT. TEMP

TEMP

CABIN — CARGO

5' — AFT | FWD | FLT | FWD | BULK

6' — UP / DWN

ISOL VALVE    CARGO HOT AIR

7,8 — FAULT / OFF    FAULT / OFF

PACK TEMP

PACK VALVE    REGUL1    REGUL2    PACK VALVE

9 — FAULT / OFF    ON    ON    FAULT / OFF — 10    RAM AIR

ECON FLOW    MAX COOL

ON    ON

AIR BLEED

X FEED

FAULT / OFF    AUTO

BLEED VALVE    APU BLEED    BLEED VALVE

11 — FAULT / OFF    ON / OFF    GND    FAULT / OFF — 12

13

Fig:6

# Fig. 7

## ELEC PWR

SMOKE

ON

ON
OFF

ON
OFF

SMOKE
REC

ON

| DC NORM' BUS-1 | | ON OFF | | DC ESS BUS | | ON OFF | | DC NORM BUS 2 |

INV

AC ESS BUS → AC EMERG BUS

EMERG PWR

ON

ON

AC BUS 1

AC BUS 2

GEN 1

FAULT
OFF

APU GEN

FAULT
OFF

EXT PWR

AVAIL
ON

GEN 2

FAULT
OFF

*Fig.8*

SMOKE                                    BAT

41 — | ON |
       | OFF |

                                    40 —( )   ON       ( )— 39
                                              NORM
                                              OFF

SMOKE REC

42 — | ON |
       | OFF |

                                         ON  ( )   EMERCENCT
                                                   PO WER
                                         OFF           — 38

*Fig.11*

LANDING ELEVATION                            | UP |
                                             |    | — 43
48 — [ ] [ ] [ ] [ ] [ ]                     | DN |

V/S  LIMIT                                   | UP |
                                             |    | — 45
49 — [ ] [ ] [ ]                             | DN |

LANDING ELEVATION                            | UP |
                                             |    | — 44
50 — [ ] [ ] [ ] [ ] [ ]                     | DN |

        A                                         A
        U  | REG 1 |                              U  | REG 2 |
        T  | ON |                                 T  | ON |
        O            — 46                          O            — 47

Fig. 9

7/9

0 130 860

21

Fig. 10

*Fig:12*

CABIN    PRESS

DITCHING

51

52

AUTO

FAULT
————
MAN

53

UP

DN

54